# FASCICULE DE BREVET EUROPEEN

(11) **EP 2 120 654 B1**
(45) Date de publication et mention de la délivrance du brevet: **17.11.2010**
(21) Numéro de dépôt: 08762089.4
(22) Date de dépôt: 14.02.2008
(51) Int. Cl.: A47J 31/32

(54) **APPAREIL DESTINE A CONFECTIONNER UNE INFUSION**
VERFAHREN ZUR HERSTELLUNG EINER INFUSION
APPARATUS FOR PREPARING AN INFUSION

(30) Priorité: 16.02.2007 FR 0701131
(43) Date de publication de la demande: 25.11.2009
(73) Titulaire: Handpresso, 77300 Fontainebleau (FR)
(72) Inventeur: NIELSEN, Henrik, F-77300 Fontainebleau (FR); PETITDEMANGE, David, F-77000 Vaux-le-Penil (FR)
(74) Mandataire: Cardy, Sophie Marie
(86) Numéro de dépôt international: PCT/FR2008/050241
(87) Numéro de publication internationale: WO 2008/104713

(56) Documents cités:
- WO-A-87/06812
- FR-A- 586 285
- FR-A- 734 854
- US-A1- 2006 230 946

## Description

L'invention, se rapporte à un appareil destiné à confectionner une infusion à partir d'une charge de produit mis en poudre ou en dosette et comprenant un boîtier comportant une tête d'infusion renfermant une chambre qui présente une ouverture par laquelle est susceptible d'être introduite la charge et présentant en son fond une buse d'amenée d'eau chaude et qui est équipée d'une pièce de fermeture présentant un orifice d'écoulement de l'infusion et montée mobile par rapport à ladite chambre pour venir occuper deux positions ouverte ou fermée correspondant respectivement au chargement - déchargement de la dite chambre et à la préparation de l'infusion ,ainsi qu' un réservoir d'eau communiquant avec la dite buse.

Elle concerne, plus précisément, un appareil dont le boîtier comporte un corps comprenant un moyen de pressurisation ayant un état actif ou inactif et destiné en l'état actif à délivrer de l'air en vue de la mise sous pression dudit réservoir d'eau et un moyen de commande apte à faire délivrer dudit réservoir un certain volume d'eau, amené à une température d'infusion, dans la chambre d'infusion.

Un appareil de ce type est décrit par exemple dans la Demande de brevet français déposée par la Demanderesse en date du 1er Février 2006 sous le numéro 0600910.

Bien que ce type d'appareil fasse une infusion correcte à partir d'une charge de café, on a constaté au cours des cycles d'infusion que ,pour une quantité de mouture donnée, la pression fournie par la pompe à air suit une courbe progressive lente passant d'une basse pression au démarrage à une forte pression dans la phase finale. Pour maintenir cette pression, il est donc nécessaire de faire fonctionner la pompe avant et tout au long du cycle d'infusion ce qui entraîne une consommation d'énergie non négligeable sur ce type d'appareil manuel. En outre, cette progression de pression n'est pas optimale pour extraire, notamment dans le cas d'une infusion de café, tous les arômes de la mouture de café. En effet, dans la phase de démarrage et du fait de la basse pression, l'eau sort du réservoir à faible pression et à faible débit et seule la couche supérieure de la mouture se gorge d'eau, tandis que sa masse est seulement humidifiée et n'a pas le temps de gonfler dans sa totalité. Par la suite, l'eau a tendance à traverser cette masse par de multiples interstices ou chemins en création sans l'imprégner suffisamment pour en extraire tous les arômes. Il s'ensuit que lorsque la pression arrive, après un certain temps, au seuil maximal déterminé par le constructeur, l'eau chaude suit les chemins préférentiels et s'écoule avec force mais sans avoir fait gonfler suffisamment la mouture.

On connaît également, comme décrit dans la Demande de brevet US 2006/0230946, un perfectionnement relatif à la mise en pression du réservoir d'eau consistant à adjoindre au moyen de pressurisation une chambre de compression qui est agencée entre ledit moyen de pressurisation et ledit réservoir d'eau et qui comporte des moyens d'isolement en entrée et en sortie. Mais ,cette Demande ne résout pas le problème évoqué ci-dessus.

L'invention à donc pour but principal de remédier à cette imperfection en proposant un nouveau moyen de confection de l'infusion en optimisant notamment le moyen de pressurisation.

Selon l'invention, le réservoir d'eau étant rempli et le moyen d'isolement en sortie comprenant le moyen de commande, ce dernier est apte à occasionner, pendant la mise en état inactif du moyen de pressurisation, la détente brusque de l'air comprimé dans ledit réservoir rempli d'eau et consécutivement son écoulement selon une courbe de pression décroissante jusqu'à la fin d'un cycle d'infusion.

Grâce à cette combinaison de moyens, chambre intermédiaire de compression et réservoir rempli d'eau, le moyen de pressurisation permet d'élever la pression jusqu'à une valeur déterminée en laquelle le moyen d'isolement en entrée est fermé, puis, lorsque le moyen de pressurisation est inactif, le moyen de commande, permet de détendre brutalement cette pression dans le réservoir rempli d'eau ce qui provoque, dans un premier temps, une chasse brutale de l'eau ainsi qu'un coup de bélier sur la charge de mouture. On a constaté que cette arrivée d'eau instantanée sans restriction notable permet le gonflement de toute la masse de mouture dans les premières secondes de l'infusion, puis dans un second temps, la chute progressive de la pression qui ralentit le passage de l'eau chaude à travers la mouture et donc favorise une extraction plus importante des arômes conduisant à une meilleure infusion dans un lapse de temps équivalent à une infusion sans chambre de compression. Ce phénomène de gonflement peut être expliqué par le mouillage complet et la pénétration d'une masse d'eau importante dans les grains de poudre de café provoquant un collage des dits grains entre eux et la formation d'un simili-bloc de mouture. Cette chambre de compression permet donc de pousser l'eau du réservoir durant un cycle d'infusion selon une courbe décroissante de la pression d'air et du débit d'eau en fonction du temps.

Selon une autre caractéristique de l'invention, le moyen d'isolement en entrée comporte un ajutage d'entrée comprenant une valve anti-retour et le moyen d'isolement en sortie comporte une buse de sortie reliée à un conduit menant au réservoir d'eau et comprenant le moyen de commande qui est formé par une valve du type tout ou rien.

Ainsi, le moyen d'isolement en entrée étant mis dans un état fermé correspondant à la fermeture de la valve anti-retour et à l'état inactif du moyen de pressurisation, la chambre de compression stocke l'air comprimé et seul le moyen de commande autorise la détente de ce volume d'air comprimé directement sur l'eau du réservoir plein, et donc le déclenchement du cycle d'infusion.

L'invention s'applique en outre et , plus particulièrement, à un appareil comportant un corps présentant une forme oblongue, ergonomique et implanté transversalement à la dite tête de manière à constituer en partie un moyen de préhension permettant à un utilisateur de faire fonctionner l'appareil, lors du cycle d'infusion, en le tenant uniquement à la main au-dessus d'une tasse à café.

Un appareil de ce type est décrit, plus précisément, dans la Demande de brevet français précitée

Quoique cet appareil soit de type portatif et comporte une structure extrêmement simplifiée en trois parties dont l'une formant corps est adaptée à être tenu à la main, le moyen de pressurisation reste un élément important dans le fonctionnement et, par son choix technique, un élément coûteux de l'appareil.

L'invention a donc également pour but de perfectionner et d'offrir un appareil de conception beaucoup plus simplifiée que celui de la Demande de brevet de la Demanderesse, en réalisant un moyen de pressurisation qui soit simple, économique tout en procurant une grande commodité et une sécurité d'utilisation ,ainsi qu'une diminution de l'énergie nécessaire dépensée pour chasser l'eau au cours d'un cycle d'infusion.

Ainsi, selon une autre caractéristique importante de l'invention, le moyen de pressurisation est une pompe à air manuelle comportant un tube à paroi cylindrique renfermant un piston coulissant et présentant une extrémité perforée de passage de la tige du piston et une extrémité close par la valve anti-retour reliée à l'ajutage d'entrée de la chambre de compression , ladite chambre étant ménagée entre la dite paroi du tube et le corps qui comporte une paroi interne montée étanche avec la paroi du tube.

Grâce à cette réalisation particulière de la pompe et de la chambre de compression en un seul ensemble , on obtient, non seulement, une construction simple, compacte et donc économique en prix de revient de fabrication, mais aussi, on procure un avantage ergonomique qui se traduit par une grande commodité d'utilisation ne nécessitant pas d'effort de pompage quelque soit l'utilisateur.

En outre, du fait de cette construction extrêmement dépouillée et ergonomique, l'appareil est rendu autonome par son moyen de pompage ce qui lui permet d'être utilisé en tous lieux.

Les caractéristiques et avantages de l'invention ressortiront d'ailleurs de la description qui va suivre, prise à titre d'exemple non limitatif, en référence aux dessins annexés dans lesquels :
La figure 1 représente en perspective et vue de dessus un appareil selon l'invention ;
La figure 2 est une vue en coupe et en élévation de l'appareil de la figure 1;
La figure 3 est une coupe verticale selon la ligne brisée 1-1 de la figure 1

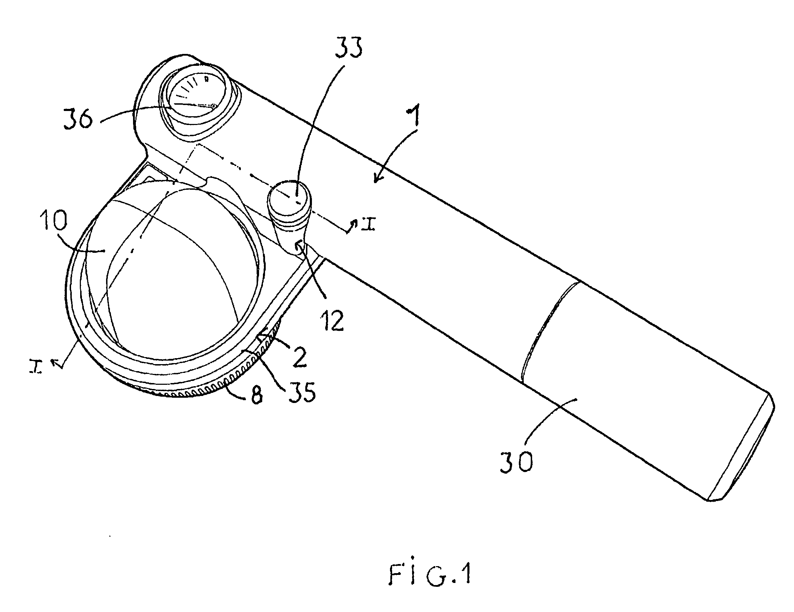

A la figure 1, on a représenté un appareil destiné à confectionner une infusion à partir notamment d'une charge de café présentée en poudre ou en dosette à corps textile ou métallique.

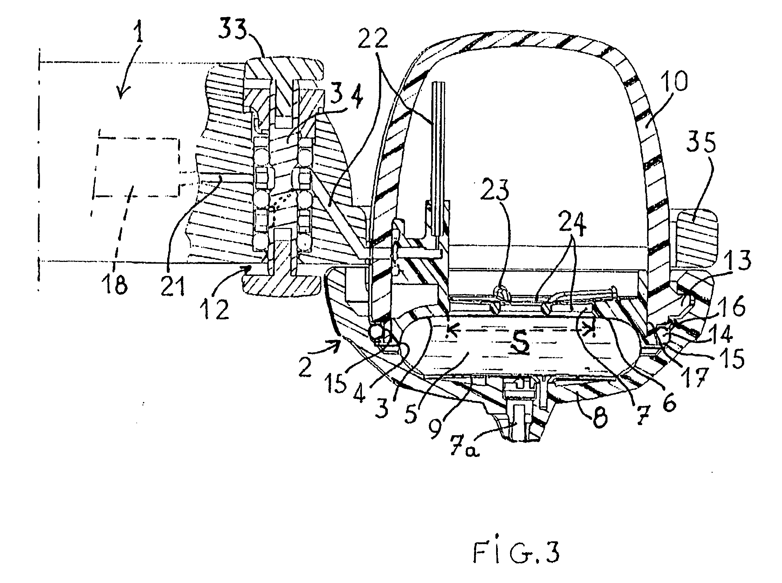

Comme on le voit mieux sur les figures 1 et 3, l'appareil comprend un boîtier 1 comportant une tête d'infusion 2 renfermant une chambre d'infusion 3 présentant une ouverture 4 par laquelle est susceptible d'être introduite la charge de café; présentement une charge 5 représentée par une dosette textile renfermant une dose de café moulu.

La chambre 3 présente en son fond 6 une buse 7 d'amenée d'eau chaude, et est équipée d'une pièce de fermeture 8 présentant la forme générale d'un godet et comprenant une grille de support 9 et un orifice 7a d'écoulement de l'infusion préparée. La tête comprend en outre un réservoir d'eau 10 communiquant avec la buse 7

Le boîtier comprend également un corps comportant un moyen de pressurisation 11 ayant un état actif ou inactif et destiné, en son état actif, à délivrer de l'air en vue de la mise sous pression dudit réservoir d'eau et un moyen de commande 12 apte à faire délivrer dudit réservoir, lors d'un cycle d'infusion, un certain volume d'eau, amené à une température d'infusion, dans la chambre d'infusion. La pièce de fermeture 8 est montée mobile par rapport au boîtier et à la chambre 3 pour venir occuper deux positions ouverte ou fermée correspondant respectivement au chargement-déchargement de la chambre et à la préparation de l'infusion.

Afin d'obtenir une construction compacte et ergonomique, le réservoir d'eau est agencé au-dessus de la chambre 3 et présente la forme générale d'une cloche dont l'ouverture 17 vient s'emboîter sur la paroi externe de la chambre qui présente à cet effet une forme complémentaire à celle de l'ouverture du réservoir.

Selon un mode préféré de l'invention la pièce de fermeture 8 en forme de godet présente un bord en forme de bague cylindrique et est montée amovible sur une portée cylindrique 13 solidaire de la paroi du réservoir au moyen d'un système à baïonnette.

L'étanchéité entre l'ouverture de la chambre et la pièce de fermeture est assurée par l'interposition d'un joint annulaire 14 qui est monté dans une gorge 15 pratiquée dans la paroi du réservoir et qui vient en regard de la paroi latérale interne 16 de ladite bague.

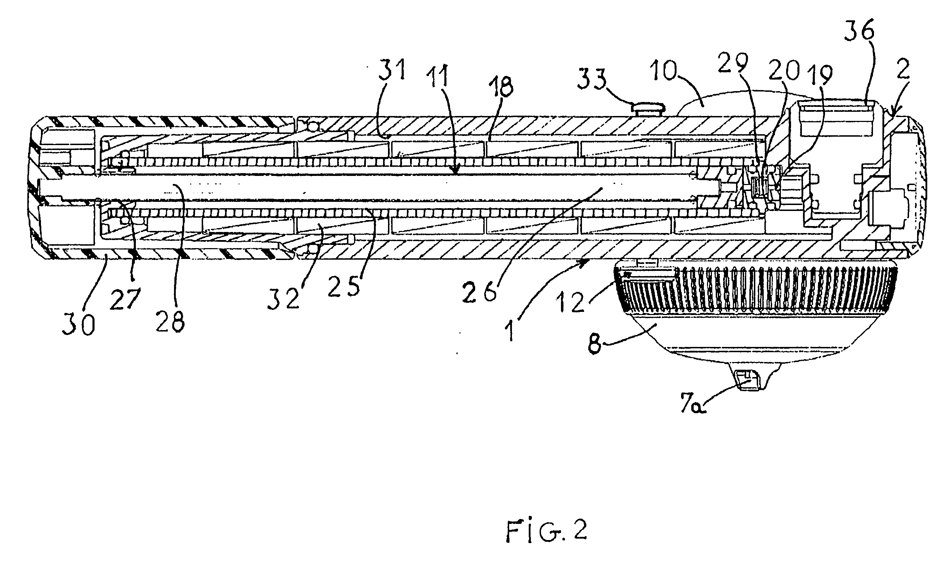

Le moyen de pressurisation 11 est relié à une chambre 18 de compression (figure 2) qui est agencée entre ledit moyen de pressurisation et ledit réservoir d'eau et qui comporte des moyens d'isolement en entrée et en sortie ; le moyen d'isolement en entrée étant subordonné à l'état du moyen de pressurisation.

Selon l'invention ,le réservoir d'eau 10 étant rempli et le moyen d'isolement en sortie comportant le moyen de commande (12), ce dernier est apte à occasionner, pendant la mise en état inactif du moyen de pressurisation, la détente brusque de l'air comprimé dans le réservoir 10 rempli d'eau et consécutivement son écoulement selon une courbe de pression décroissante jusqu'à la fin d'un cycle d'infusion.

Comme illustré sur la figure 2 le moyen d'isolement en entrée comporte un ajutage d' entrée 19 comprenant une valve anti-retour 20.En outre, ce moyen d'isolement peut dans ce cadre général soit, par exemple, comporter un robinet d'arrêt ou une commande d'arrêt d'une pompe électrique qui placera le moyen de pressurisation en son état inactif. Le moyen d'isolement en sortie comprend une buse de sortie 21 reliée à un conduit 22 (schématisé à la figure 3) menant au réservoir d'eau et comprenant le moyen de commande 12 formé d'une valve du type tout ou rien, c'est à dire laissant passer sans réglage tout le débit d'air ou le bloquant.

Une telle valve peut être asservie manuellement ou électriquement.

Comme représenté, le conduit 22 débouche verticalement dans la partie supérieure du réservoir d'eau qui comme expliqué plus loin facilitera sa mise à l'air libre pour obtenir une sécurité.

Selon un mode de réalisation préférée, le conduit 12 présente, soit au niveau de la valve 12,soit en partie ou sur toute sa longueur un diamètre sensiblement égal à 0,3 millimètre ;ceci afin d'obtenir un débit approprié à une bonne chasse de l'eau du réservoir rempli tout en favorisant la confection de mousse à la surface de l'infusion.

De préférence, ladite pression dans la dite chambre de compression est amenée à une valeur de l'ordre de 10 à 20 bars et préférentiellement vers 17 bars pour obtenir un espresso fort, goûteux et d'une belle couleur café avec une couche de mousse onctueuse

Ainsi, la très haute pression d'air est maintenue à sa valeur choisie dans la chambre de compression, d'une part, par le moyen d'isolement en entrée mis en un état fermé, à savoir état inactif du moyen de pressurisation et valve anti-retour 20 , et, d'autre part, par la valve 12 de sorte qu'elle n'est relâchée dans le réservoir plein d'eau qu' uniquement à la demande de l'utilisateur. Cette détente d'air comprimé va donc expulser brutalement l'eau du réservoir sur la mouture qui va gonfler dans sa masse dès les premières secondes occasionnant l'extraction idéale des arômes. Puis, cette pression va diminuer progressivement selon une courbe décroissante en ralentissant le débit d'eau pour obtenir une infusion jugée excellente de part notamment l'extraction maximale des arômes.

Dans le cas ou le fabricant décide de réaliser un appareil à basse pression de l'ordre de 2 à 5 bars, la chambre de compression ainsi que la valve de type tout ou rien réalisent les mêmes fonctions mais avec un résultat légèrement inférieur à celui obtenu à haute pression. Comme on le voit bien sur la figure 1, le boîtier 1 présente une structure portative dont le corps présente une forme oblongue ergonomique et tubulaire sur lequel est implanté transversalement et latéralement la tête 2 et comporte le moyen de pressurisation 11.

Cette implantation orthogonale et déportée de la tête par rapport à l'axe longitudinal du corps permet à ce dernier de constituer en partie un moyen de préhension permettant de placer, lors du cycle d'infusion, la tête en une position dans laquelle l'orifice d'écoulement 7a de la pièce de fermeture 8 est dirigé vers le bas en direction d'une tasse de collecte de l'infusion. Le moyen de préhension est conformé de manière à être commodément saisi par une main d'un utilisateur pour constituer ainsi une poignée.

Selon une autre caractéristique de l'invention la buse 7 d'amenée d'eau chaude comporte une grille 23 de répartition dont la face externe est pratiquement en correspondance dimensionnelle, c'est à dire sensiblement de mêmes dimensions, avec la surface d'attaque S de la face de la charge en contact avec la dite grille. Par surface d'attaque de la face, on exprime la surface circonscrite par la grille et appartenant à la face soit de l'enveloppe qui contient la mouture qu'elle soit en papier, textile ou métallique et communément appelée dosette, soit à la surface de la poudre de mouture en contact avec la grille. En général les dosettes utilisées ont un diamètre de 44 mm et la surface d'attaque préconisée est de l'ordre de 35mm.

Comme représenté à la figure 2 la grille 23 présente plusieurs trous 24 formant par l'ensemble de leurs surfaces de section une surface de passage de fluide comprise selon un rapport de 10 à 25 % de la surface de la face de la charge, et de préférence selon un rapport de 17%.

Selon une autre caractéristique importante de la présente invention, le moyen de pressurisation 11 est une pompe à air manuelle comportant un tube 25 à paroi cylindrique qui comprend un piston 26 coulissant longitudinalement dans le tube et qui présente une extrémité 27 perforée de passage de la tige 28 du piston reliée à une poignée 30 et une extrémité 29 close par la valve anti-retour 20 reliée à l'ajutage d'entrée 19 de la chambre 18 de compression. Cette pompe est de type classique et présente une fuite d'air ménagée au niveau de l'extrémité 27 et un clapet de compression dans le piston 26.Dans cette réalisation, on comprendra que le moyen d'isolement en entrée occupe un état fermé résultant de la combinaison de la fermeture du clapet de compression et de la valve 20 lors de l'arrêt de fonctionnement de la pompe correspondant à l'état inactif du moyen de pressurisation. Comme réalisé, ladite chambre est ménagée entre la dite paroi du tube et le corps qui comporte une paroi interne 31 montée étanche avec la paroi du tube.

Préférentiellement, la paroi interne 31 du corps est cylindrique et agencée coaxialement au tube, et la chambre 18 de compression est susceptible de recevoir au-moins un élément volumique 32 d'ajustement de la capacité de ladite chambre 18.

De préférence, l'élément volumique 32 est constitué par un anneau enfilé autour du tube.

Ainsi, si l'on désire, à la construction, réduire la capacité initiale de la chambre à un volume déterminé, il suffit de mettre un ou plusieurs anneaux 32 ; dans le cas représenté à la figure 1, les éléments sont au nombre de six.

En outre, grâce à l'implantation transversale et latérale de la tête par rapport au corps, on implante le moyen de commande 12 dans la région commune à l'intersection antérieure de la tête et du corps (figure 1). Ainsi, la valve 12 est agencée sur le corps au niveau du moyen de préhension et à proximité de la tête 2 et comporte une manette 33 saillante du boîtier de manière à être commandée par le pouce de l'utilisateur lorsque que ce dernier tient l'appareil d'une main.

Comme on le voit schématiquement sur la figure 3,la valve 12 de type tout ou rien comprend un curseur mobile 34 solidaire de la manette 33 et coulissant dans un cylindre à deux voies de manière à occuper, depuis un état de repos correspondant à une première fermeture du moyen d'isolement en sortie la chambre de compression, une première voie correspondant à la détente et donc l'envoi de l'air comprimé dans le réservoir et le commencement de l'infusion, et une seconde voie correspondant de nouveau à l'arrêt de la pression d'air dans le réservoir et donc l'arrêt de l'infusion, avec une mise à l'air libre du réservoir.

Un des avantages de l'invention est de proposer un appareil qui est mis en pré-fonctionnement par une simple pompe à air manuelle mettant la chambre de compression à une pression choisie par l'utilisateur et préconisée par le fabricant pour obtenir un espresso parfait et mousseux. Avec une telle pompe, on peut amener facilement la pression autour de 17 bars.

Pour faciliter le choix de la pression dans la chambre 18 par l'utilisateur, un manomètre 36 est agencé dans la région antérieure du corps et est relié à la dite chambre.

Grâce à cette construction particulière de la chambre de compression, on réalise un appareil compact et léger qui tient dans une seule main, et qui est commode d'utilisation puisque que reprenant la classique utilisation d'une pompe manuelle classique.

Dans une réalisation préférée de l'invention et comme représenté sur les dessins, le réservoir d'eau 10 comporte une enveloppe thermiquement isolante en matériau plastique de manière à conserver l'eau chaude qui lui est amenée de l'extérieur à une température adaptée à la confection de l'infusion, préférentiellement choisie entre 80 et 100°C.

Cette eau chaude peut provenir, par exemple, d'un robinet ou d'une bouilloire.

Afin de pouvoir offrir une gamme d'appareils selon l'invention en vue de satisfaire différents utilisateurs, le réservoir 10 est monté démontable au moyen de vis (non représentées) sur un châssis de liaison 35 solidaire du boîtier et peut ainsi être remplacé par des réservoirs de capacités différentes. Ceci permet d'avoir toujours un réservoir d'eau plein adapté et de garantir la chasse brutale de toute l'eau sur la charge de café notamment. Dans l'exemple décrit sur les figures, le réservoir 10 présente une capacité d'environ 50 millilitres pratiquement égal à celle d'une tasse de café de type classique, comprise généralement entre 40 et 50 millilitres.

Le châssis 35 est réalisé préférentiellement en un matériau rigide et résistant aux contraintes mécaniques, par exemple en métal ou en plastique chargé de fibres de verre ; ceci afin de garantir la bonne fixation du réservoir d'eau.

Le procédé de réalisation d'infusion de café dans un mode dit espresso est mis en oeuvre selon les étapes suivantes. En partant de la position ouverte de la pièce de fermeture 8, on saisit d'une seule main le moyen de préhension constitué par une partie du corps et formant poignée pour amener la chambre 3 avec son ouverture 4 tournée vers le haut ;
on remplit, par une source d'eau chaude extérieure à l'appareil, le réservoir 10 en versant par les trous 24 de la grille 23 de l'eau préalablement chauffée à une température comprise entre 80 et 100°C ;
on introduit dans la chambre d'infusion une charge de café;
on verrouille et ferme, par enclenchement de la baïonnette, la chambre par la pièce de fermeture 8 ;
on retourne l'appareil par sa poignée en faisant tourner dans sa main le corps pour placer l'orifice d'écoulement 7a vers le bas au-dessus d'une tasse à café ;
on met en fonctionnement la pompe manuelle par la poignée 30 jusqu'à faire monter et obtenir la pression choisie, par exemple 17 bars, dans la chambre de compression 18 ; puis, avec le pouce de la main, on appuie vers le bas sur la manette 33 pour faire passer le curseur 34 de sa position de repos à la première voie de relâchement brutale de la pression d'air dans le réservoir.

Cette mise en pression du réservoir 10 chasse donc l'eau à la pression instantanée maximale dans la chambre et donc à travers toute la charge de café et confectionne ainsi une excellente infusion avec tous les arômes extraits.

Dès que la tasse est remplie, on actionne la manette 33 pour obtenir la fermeture de la chambre 18 de compression et la mise à l'air libre du réservoir réalisant ainsi une fonction de sécurité.

D'autres variantes de réalisation de l'invention peuvent être envisagées sans sortir du cadre de l'invention ; par exemple, on peut remplacer la pompe manuelle par une pompe électrique à air, voire même une cartouche de gaz, et la valve tout ou rien à curseur par une valve électromagnétique. En outre, l'invention est applicable à la confection d'infusion de thé ou de chocolat à partir notamment de dosette.

## Revendications

1. Appareil destiné à confectionner une infusion et comprenant, un boîtier (1) comportant une tête d'infusion (2) renfermant une chambre(3) qui présente une ouverture(4) par laquelle est susceptible d'être introduite une charge (5) de produit à infuser et présentant en son fond (6) une buse (7) d'amenée d'eau chaude, ainsi qu'un réservoir d'eau (10) communiquant avec la dite buse,
ledit appareil comportant en outre un moyen de pressurisation (11) ayant un état actif ou inactif et destiné en l'état actif à délivrer de l'air en vue de la mise sous pression dudit réservoir d'eau et un moyen de commande (12) apte à faire délivrer dudit réservoir un certain volume d'eau, amené à une température d'infusion, dans la chambre d'infusion, ledit moyen de pressurisation (11) étant relié à une chambre (18) de compression qui est agencée entre ledit moyen de pressurisation (11) et ledit réservoir d'eau et qui comporte des moyens d'isolement en entrée et en sortie,
ledit appareil **se caractérisant en ce que** ladite chambre est équipée d'une pièce de fermeture (8) présentant un orifice d'écoulement (7a) de l'infusion en ce que
ledit boîtier comporte d'autre part; un corps comprenant ledit moyen de pressurisation (11) et ledit moyen de commande ;
le réservoir d'eau (10) étant rempli et le moyen d'isolement en sortie comprenant le moyen de commande (12), ce dernier est apte à occasionner, pendant la mise en état inactif du moyen de pressurisation, la détente brusque de l'air comprimé dans ledit réservoir (10) rempli d'eau et consécutivement son écoulement selon une courbe de pression décroissante jusqu'à la fin d'un cycle d'infusion.

2. Appareil selon la revendication 1 , **caractérisé en ce que** le moyen d'isolement en entrée comporte un ajutage d' entrée (19) comprenant une valve anti-retour (20) et le moyen d'isolement en sortie comporte une buse de sortie (21) reliée à un conduit (22) menant au réservoir d'eau et comprenant le moyen de commande (12) formé d'une valve du type tout ou rien.

3. Appareil selon la revendication 1 ou 2, **caractérisé en ce que** la buse (7) d'amenée d'eau chaude comporte une grille(23)de répartition dont la face externe est pratiquement en correspondance dimensionnelle avec la surface d'attaque (S) de la face de la charge en contact avec la dite grille.

4. Appareil selon la revendication 3 **caractérisé en ce que** la grille (23) présente plusieurs trous (24) formant par l'ensemble de leurs surfaces de section une surface de passage de fluide comprise selon un rapport de 10 à 25 % de la surface de la face de la charge, et de préférence selon un rapport de 17%.

5. Appareil selon la revendication 3 ou 4 , **caractérisé en ce que** le réservoir d'eau présente la forme générale d'une cloche dont l'ouverture (17) vient s'emboîter sur la paroi externe de la chambre qui présente à cet effet une forme complémentaire à celle de l'ouverture du réservoir.

6. Appareil selon l'une quelconque des revendications 2 à 5 et dans lequel le corps présente une forme oblongue, sur lequel est implanté transversalement la tête (2) de manière à constituer en partie un moyen de préhension, **caractérisé en ce que** le moyen de pressurisation (11) est une pompe à air manuelle comportant un tube (25) à paroi cylindrique qui comprend un piston (26) coulissant et qui présente une extrémité (27) perforée de passage de la tige (28) du piston reliée à une poignée (30) et une extrémité (29) comportant le moyen d'entrée, la chambre (18) de compression étant ménagée entre la dite paroi du tube et le corps qui comporte une paroi interne (31) montée étanche avec la paroi du tube.

7. Appareil selon la revendication 6, **caractérisé en ce que** la paroi interne (31) du corps est cylindrique et agencée coaxialement au tube (25), et la chambre (18) de compression est susceptible de recevoir au-moins un élément volumique (32) d'ajustement de la capacité de ladite chambre.

8. Appareil selon la revendication 7, **caractérisé en ce que** l'élément volumique (32) est constitué par un anneau enfilé autour du tube.

9. Appareil selon l'une quelconque des revendications 6 à 8, **caractérisé en ce que** la valve (12) est agencée sur le corps au niveau du moyen de préhension et à proximité de la tête (2) et comporte une manette (33) saillante du boîtier de manière à être commandée par le pouce de l'utilisateur.

10. Appareil selon la revendication 9, **caractérisé en ce que** la valve (12) comprend un curseur mobile (34) solidaire de la manette (33) et coulissant dans un cylindre à deux voies de manière à occuper, depuis un état de repos correspondant à une première fermeture du moyen d'isolement en sortie de la chambre de compression, une première voie correspondant à l'envoi de la pression d'air dans le réservoir et le commencement de l'infusion, et une seconde voie correspondant à l'arrêt de la pression d'air dans le réservoir et donc l'arrêt de l'infusion, et à une mise à l'air libre du réservoir.

11. Appareil selon l'une quelconque des revendications précédentes, **caractérisé en ce que** le réservoir (10) est monté démontable sur un châssis (35) solidaire du boîtier et peut présenter des capacités différentes.

12. Appareil selon la revendication 2 et l'une quelconque des revendications 2 à 11, **caractérisé en ce que** le conduit (22)comprenant le moyen de commande (12)et menant de la buse de sortie (21) au réservoir d'eau (10) présente en tout ou en partie un diamètre sensiblement égal à 0,3 millimètre.

## Claims

1. An appliance for preparing an infusion, the appliance comprising a case (1) comprising an infusion head (2) containing a chamber (3) with an opening (4) through which a fill (5) of substance for infusing can be inserted and presenting in its end wall (6) a hot water feed nozzle (7), as well as a water container (10) communicating with said nozzle;
said appliance further containing pressurizing means (11) having an active state or an inactive state and designed in the active state to deliver air in order to pressurize said water container, and control means (12) suitable for causing a certain volume of water raised to an infusion temperature to be delivered from said container into the infusion chamber, said pressurizing means (11) being connected to a compression chamber (18) that is arranged between said pressurizing means (11) and said water container and that includes inlet and outlet isolation means;
said appliance being **characterized in that** said chamber is fitted with a closure part (8) presenting an outflow orifice (7a) for the infusion; **in that** said case comprises, on the other hand, a body containing said pressurizing means (11) and said control means; and **in that**
the water container (10) being full and the outlet isolation means including the control means (12), the control means are suitable, when the pressurization means are placed in the inactive state, for causing the compressed air to expand suddenly into said water-filled container (10) and then to flow with a pressure curve that decreases down to the end of an infusion cycle.

2. An appliance according to claim 1, **characterized in that** said inlet isolation means include an inlet passage (19) containing a check valve (20) and the outlet isolation means include an outlet nozzle (21) connected to a duct (22) leading to the water container and including the control means (12) formed by an on/off type valve.

3. An appliance according to claim 1 or claim 2, **characterized in that** the hot water feed nozzle (7) includes a distribution grid (23) with its outside face practically corresponding dimensionally with the inlet area (S) of the face of the fill that is in contact with said grid.

4. An appliance according to claim 3, **characterized in that** the grid (23) presents a plurality of holes (24) with the sum of their sectional areas forming a fluid flow section occupying 10% to 25% of the area of the face of the fill, and preferably occupying 17%.

5. An appliance according to claim 3 or claim 4, **characterized in that** the water container is generally in the shape of a bell with its mouth (17) engaging on the outside wall of the chamber, which outside wall presents, for this purpose, a shape that is complementary to the shape of the mouth of the container.

6. An appliance according to any one of claims 2 to 5, and in which the body presents an oblong shape, with the head (2) being located transversely thereon so that part of the body constitutes grip means, the appliance being **characterized in that** the pressurizing means (11) are a hand-operated air pump comprising a tube (25) with a cylindrical wall that slidably receives a piston (26) and that presents a perforated end (27) for passing the rod (28) of the piston, which rod is connected to a handle (30), and an end (29) including the inlet means, the compression chamber (18) being arranged between said wall of the tube and the body that has an internal wall (31) mounted in leaktight manner with the wall of the tube.

7. An appliance according to claim 6, **characterized in that** the internal wall (31) of the body is cylindrical and arranged coaxially about the tube (25), and the compression chamber (18) is suitable for receiving at least one volume element (32) for adjusting the capacity of said chamber.

8. An appliance according to claim 7, **characterized in that** the volume element (32) is constituted by a ring placed around the tube.

9. An appliance according to any one of claims 6 to 8, **characterized in that** the valve (12) is arranged on the body in the grip means and close to the head (2) and comprises a pushbutton (33) projecting from the case so as to be suitable for being controlled by the thumb of the user.

10. An appliance according to claim 9, **characterized in that** the valve (12) comprises a movable slider (34) connected to the pushbutton (33) and slidable in a two-port cylinder so as to occupy, starting from a rest state corresponding to first closure of the outlet isolation means of the compression chamber, a first port corresponding to delivering the air pressure into the container and beginning infusion, and a second port corresponding to stopping the delivery of air pressure to the container and thus stopping infusion, and to connecting the container to the surrounding atmosphere.

11. An appliance according to any preceding claim, **characterized in that** the container (10) is removably mounted on a frame (35) secured to the case, thereby enabling containers of different capacities to be fitted.

12. An appliance according to claim 2 and any one of claims 2 to 11, **characterized in that** the duct (22) including the control means (12) and leading from the outlet nozzle (21) to the water container (10) presents a diameter that is substantially equal to 0.3 mm, in full or in part.

## Patentansprüche

1. Vorrichtung zur Herstellung eines Aufgusses, mit einem Gehäuse (1), das einen Aufgußkopf (2) umfaßt, welcher eine Kammer (3), die eine Öffnung (4) aufweist, über die eine Ladung (5) eines aufzugießenden Produkts eingebracht werden kann, und die an ihrem Boden (6) eine Düse (7) zum Zuführen von heißem Wasser aufweist, sowie einen mit der Düse in Verbindung stehenden Wasserbehälter (10) enthält,
wobei die Vorrichtung ferner ein Druckbeaufschlagungsmittel (11), das einen aktiven oder inaktiven Zustand aufweist und im aktiven Zustand dazu bestimmt ist, Luft zu liefern, um den Wasserbehälter unter Druck zu setzen, sowie ein Steuermittel (12) umfaßt, das geeignet ist, aus dem Behälter eine auf eine Aufgußtemperatur gebrachte bestimmte Wassermenge in die Aufgußkammer liefern zu lassen, wobei das Druckbeaufschlagungsmittel (11) mit einer Druckkammer (18) verbunden ist, die zwischen dem Druckbeaufschlagungsmittel (11) und dem Wasserbehälter angeordnet ist und die Absperrmittel am Eingang und am Ausgang aufweist,
wobei die Vorrichtung **dadurch gekennzeichnet ist, daß** die Kammer mit einem Verschlußteil (8) ausgestattet ist, das eine Öffnung zum Ablaufen (7a) des Aufgusses aufweist,
daß das Gehäuse andererseits einen Körper umfaßt, der das Druckbeaufschlagungsmittel (11) und das Steuermittel aufweist, und
daß, wenn der Wasserbehälter (10) gefüllt ist und da das Ausgangsabsperrmittel das Steuermittel (12) umfaßt, letzteres geeignet ist, während des Überführens des Druckbeaufschlagungsmittels in den inaktiven Zustand das schlagartige Entspannen der Druckluft in den Behälter (10), der mit Wasser gefüllt ist, und folglich dessen Ablaufen entsprechend einer bis zum Ende eines Aufgußzyklus abnehmenden Druckkurve zu bewirken.

2. Vorrichtung nach Anspruch 1, **dadurch gekennzeichnet, daß** das Eingangsabsperrmittel eine Einlaßdüse (19) mit einem Rückschlagventil (20) und das Ausgangsabsperrmittel eine Auslaßdüse (21) umfaßt, die mit einer Leistung (22) verbunden ist, die zum Wasserbehälter führt und das von einem Ventil vom Typ Auf/Zu-Ventil gebildete Steuermittel (12) umfaßt.

3. Vorrichtung nach Anspruch 1 oder 2, **dadurch gekennzeichnet, daß** die Düse (7) zum Zuführen von heißem Wasser ein Verteilungsgitter (23) umfaßt, dessen Außenseite praktisch mit der Angriffsfläche (S) der mit dem Gitter in Kontakt befindlichen Seite der Ladung in den Abmessungen übereinstimmt.

4. Vorrichtung nach Anspruch 3, **dadurch gekennzeichnet, daß** das Gitter (23) mehrere Löcher (24) aufweist, die durch die Gesamtheit ihrer Querschnittsflächen eine Fluiddurchgangsfläche bilden, die in einem Verhältnis von 10 bis 25 % der Fläche der Seite der Ladung und vorzugsweise in einem Verhältnis von 17 % liegt.

5. Vorrichtung nach Anspruch 3 oder 4, **dadurch gekennzeichnet, daß** der Wasserbehälter allgemein die Form einer Glocke aufweist, deren Öffnung (17) auf die Außenwand der Kammer aufgepaßt wird, die zu diesem Zweck eine zur Form der Öffnung des Behälters ergänzende Form aufweist.

6. Vorrichtung nach einem der Ansprüche 2 bis 5 und bei der der Körper eine längliche Form aufweist, auf dem der Kopf (2) quer angeordnet ist, so daß er teilweise ein Greifmittel bildet, **dadurch gekennzeichnet, daß** das Druckbeaufschlagungsmittel (11) eine Handluftpumpe ist, die ein Rohr (25) mit zylindrischer Wand aufweist, das einen verschiebbaren Kolben (26) umfaßt und das ein durchbohrtes Ende (27) für den Durchgang der mit einem Griff (30) verbundenen Stange (28) des Kolbens sowie ein das Einlaßmittel aufweisendes Ende (29) umfaßt, wobei die Druckkammer (18) zwischen der Wand des Rohrs und dem Körper, der eine mit der Wand des Rohres dicht angebrachte Innenwand (31) aufweist, ausgebildet ist.

7. Vorrichtung nach Anspruch 6, **dadurch gekennzeichnet, daß** die Innenwand (31) des Körpers zylindrisch und zu dem Rohr (25) koaxial angeordnet ist und daß die Druckkammer (18) geeignet ist, wenigstens ein Volumenelement (32) zum Einstellen des Fassungsvermögens der Kammer aufzunehmen.

8. Vorrichtung nach Anspruch 7, **dadurch gekennzeichnet, daß** das Volumenelement (32) von einem um das Rohr gestreiften Ring gebildet ist.

9. Vorrichtung nach einem der Ansprüche 6 bis 8, **dadurch gekennzeichnet, daß** das Ventil (12) an dem Körper im Bereich des Greifmittels und in der Nähe des Kopfes (2) angeordnet ist und einen Stellknopf (33) umfaßt, der an dem Gehäuse vorsteht, um mit dem Daumen des Benutzers betätigt zu werden.

10. Vorrichtung nach Anspruch 9, **dadurch gekennzeichnet, daß** das Ventil (12) einen beweglichen Schieber (34) umfaßt, der mit dem Stellknopf (33) fest verbunden und in einem Zwei-Wege-Zylinder verschieblich ist, so daß er ausgehend von einem einem ersten Schließen des Absperrmittels am Ausgang der Druckkammer entsprechenden Ruhezustand einen ersten Weg nimmt, der dem Senden des Luftdruckes in den Behälter und dem Beginn des Aufgusses entspricht, sowie einen zweiten Weg, der dem Abschalten des Luftdrucks in dem Behälter und folglich dem Anhalten des Aufgusses und einem Entlüften des Behälters entspricht.

11. Vorrichtung nach einem der vorhergehenden Ansprüche, **dadurch gekennzeichnet, daß** der Behälter (10) an einem Gestell (35), das mit dem Gehäuse fest verbunden ist, abnehmbar angebracht ist und unterschiedliche Aufnahmekapazitäten aufweisen kann.

12. Vorrichtung nach Anspruch 2 und nach einem der Ansprüche 2 bis 11, **dadurch gekennzeichnet, daß** die Leitung (22), die das Steuermittel (12) umfaßt und von der Austrittsdüse (21) zum Wasserbehälter (10) führt, in Gänze oder teilweise einen Durchmesser aufweist, der im wesentlichen gleich 0,3 Millimeter ist.
